# EUROPÄISCHE PATENTSCHRIFT

(11) **EP 0 902 845 B1**
(45) Veröffentlichungstag und Bekanntmachung des Hinweises auf die Patenterteilung: **08.03.2000**
(21) Anmeldenummer: 96926311.0
(22) Anmeldetag: 21.08.1996
(51) Int. Cl.: C23D 5/04, F16L 23/00

(54) **VERFAHREN ZUR HERSTELLUNG EINES EMAILLIERTEN VERBINDUNGSBEREICHS BEI EINEM STAHLBAUTEIL**
METHOD FOR PRODUCING A VITREOUS-EMANEL-COATED JOINING ZONE ON A STEEL COMPONENT
PROCEDE DE REALISATION D'UNE ZONE DE LIAISON EMAILLEE SUR UN COMPOSANT EN ACIER

(30) Priorität: 03.06.1996 CH 139296
(43) Veröffentlichungstag der Anmeldung: 24.03.1999
(73) Patentinhaber: Etoile Holding AG, 4107 Ettingen (CH)
(72) Erfinder: SEEDORFF, Peter, CH-4107 Ettingen (CH)
(74) Vertreter: Bollhalder, Renato
(86) Internationale Anmeldenummer: CH9600289
(87) Internationale Veröffentlichungsnummer: WO9746735

(56) Entgegenhaltungen:
- DE-A- 4 117 527

## Beschreibung

Die vorliegende Erfindung bezieht sich auf ein Verfahren zur Herstellung eines emaillierten Verbindungsbereichs bei einem Stahlbauteil, wie es im Oberbegriff der unabhängigen Patentansprüche 1 und 2 definiert ist.

In der chemischen Industrie werden emaillierte Stahlbauteile wie Rohrteile, Behälter, Apparatestutzen usw. eingesetzt, um zu verhindern, dass die Stahlbauteile bei Kontakt mit hochkorrosiven Produkten von diesen zerfressen werden. Die hierzu verwendeten Emaille sind als Chemieemaille bekannt und haben im allgemeinen niedere Abtragungsraten in Säure und Lauge, eine gute Temperaturwechselbeständigkeit und Haftfähigkeit auf Emailträgermaterialien.

Die Verbindung zweier Stahlbauteile erfolgt normalerweise über Flansche, die ebenfalls teilweise emailliert werden müssen. Der emaillierte Teil eines Flansches oder eines anderen Verbindungselements wird im folgenden als Verbindungsbereich bezeichnet. Er weist einen Dichtbereich auf, der über eine abgerundete Kante in einen Produktbereich übergeht, der den hauptsächlichen Kontaktbereich zum Produkt darstellt. Da der Radius der abgerundeten Kanten in Verbindungsbereichen herkömmlicher Stahlbauteile relativ gross ist, entstehen beim Zusammenbau zweier Stahlbauteile relativ grosse Toträume, die eine ausreichende Reinigung bzw. eine Sterilisierung der Verbindung der beiden Stahlbauteile in montiertem Zustand verunmöglichen. Es müssen daher bei Produktwechsel die beiden Stahlbauteile demontiert und nach der Reinigung bzw. Sterilisierung wieder montiert werden.

Der Erfindung liegt daher die Aufgabe zugrunde, ein Verfahren der eingangs erwähnten Art zu schaffen, mit dem bei Stahlbauteilen emaillierte Verbindungsbereiche herstellbar sind, die eine totraumarme Verbindung zweier Stahlbauteile ermöglichen, wobei das Email mit den bekannten Chemieemaillen vergleichbare Abtragungsraten in Säure und Lauge, Temperaturwechselbeständigkeit und Haftfähigkeit auf dem Emailträgermaterial haben soll.

Diese Aufgabe wird durch die erfindungsgemässen Verfahren zur Herstellung eines emaillierten Verbindungsbereichs gelöst, wie sie in den unabhängigen Patentansprüchen 1 und 2 definiert sind. Bevorzugte Ausführungsvarianten ergeben sich aus den abhängigen Patentansprüchen 3 bis 8. Die Patentansprüche 9 und 10 betreffen ein Stahlbauteil bzw. eine Verbindung zweier Stahlbauteile mit mindestens einem mit einem erfindungsgemässen Verfahren hergestellten Verbindungsbereich.

Das Wesen der Erfindung besteht darin, dass bei einem Verfahren zur Herstellung eines emaillierten Verbindungsbereichs bei einem Stahlbauteil, wobei der Verbindungsbereich einen über eine abgerundete Kante in einen Produktbereich übergehenden Dichtbereich aufweist, im Verbindungsbereich ein Emailträgermaterial mit einer abgerundeten Kante mit einem Radius zwischen etwa 0,5 und etwa 2 mm ausgebildet wird. Als Emailträgermaterial wird ein Material verwendet, das nur sehr wenig bzw. zur emailabgewandten Seite ausgast und eine grundemailfreie bzw. -arme Emaillierung zulässt. Anschliessend wird das Emailträgermaterial direkt mit einem hochsäurefesten Chemieemail oder zuerst mit einem Grundemail und dann mit einem hochsäurefesten Chemieemail beschichtet. Die Beschichtung mit dem Chemieemail und gegebenenfalls mit dem Grundemail erfolgt in mehreren Schichten durch mehrmaliges Aufbringen, Brennen, Überdrehen und Überschleifen.

Dadurch, dass beim Emailträgermaterial für den Übergang vom Dichtbereich zum Produktbereich ein Kantenradius von nur zwischen etwa 0,5 und etwa 2 mm gewählt wird und ein Material verwendet wird, das eine grundemailfreie bzw. -arme Emaillierung und damit eine dünnere Emailschicht zulässt, kann der Totraum bei einer Verbindung zweier Stahlbauteile im Vergleich zu herkömmlichen Verbindungen klein gehalten werden. Damit wird es möglich, eine Heissdampf-Reinigung der Verbindung der beiden Stahlbauteile in montiertem Zustand vorzunehmen.

Im folgenden werden die erfindungsgemässen Verfahren zur Herstellung eines emaillierten Verbindungsbereichs bei einem Stahlbauteil sowie erfindungsgemäss hergestellte Verbindungsbereiche aufweisende Stahlbauteile bzw. Verbindungen von Stahlbauteilen unter Bezugnahme auf die beigefügten Zeichnungen und anhand von Ausführungsbeispielen detaillierter beschrieben. Es zeigen:
- Fig. 1 -: einen Längsschnitt durch eine Verbindung zweier Rohrteile mit Flachdichtung;
- Fig. 2 -: einen Längsschnitt durch eine Verbindung zweier Rohrteile mit ringförmiger Weichstoff-Dichtung;
- Fig. 3 -: eine Draufsicht auf den Verbindungsflansch eines Rohrteils gemäss Fig. 2;

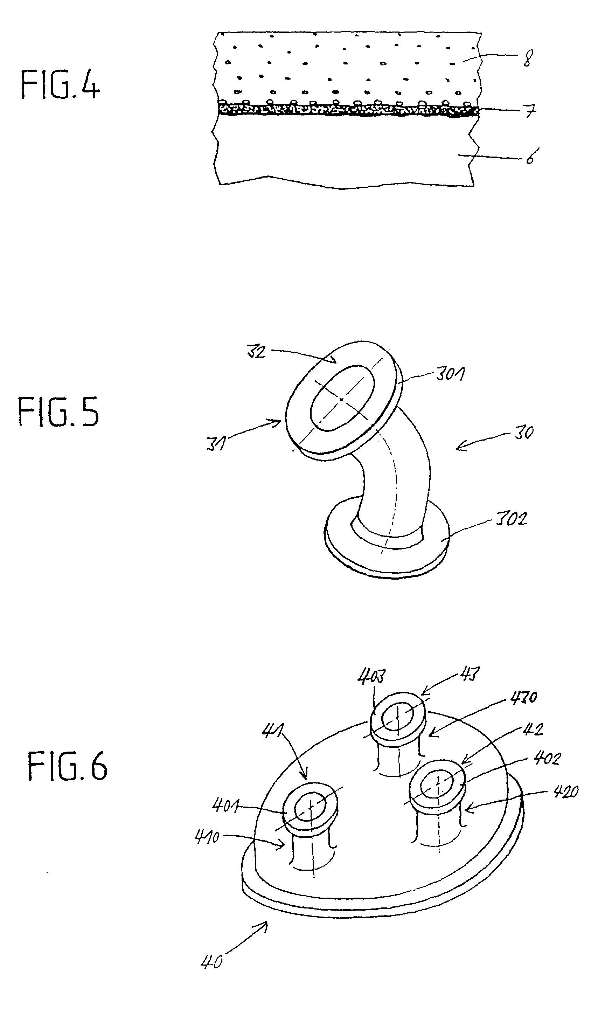

- Fig. 4 -: schematisch den Schichtaufbau eines emaillierten Verbindungsbereichs;
- Fig. 5 -: eine Perspektivansicht eines zwei Verbindungsbereiche aufweisenden Rohrteils und
- Fig. 6 -: eine Perspektivansicht eines drei Apparatestutzen mit je einem Verbindungsbereich aufweisenden Apparatedeckels.

### Figur 1

Zwei Rohrteile 1 und 2 weisen als Verbindungselement je einen Verbindungsflansch 11 bzw. 21 auf, auf denen emaillierte Verbindungsbereiche 3 bzw. 4 angeordnet sind. Der Verbindungsbereich 3 umfasst einen scheibenförmigen Dichtbereich, der über eine abgerundete Kante 300 in einen Produktbereich 9 übergeht. Dem scheibenförmigen Dichtbereich des Verbindungsbereichs 3 des Rohrteils 1 gegenüber liegt der scheibenförmige Dichtbereich des Verbindungsbereichs 4 des Rohrteils 2. Letzterer Dichtbereich geht über eine abgerundete Kante 400 in einen Produktbereich 90 über.

Die Verbindungsflansche 11 und 21 können auf beliebige, bekannte Weise miteinander verbunden sein, beispielsweise durch Verschraubung (nicht dargestellt).

Zwischen dem Dichtbereich des Verbindungsbereichs 3 des Rohrteils 1 und dem Dichtbereich des Verbindungsbereichs 4 des Rohrteils 2 ist im Kraft-Hauptschluss eine harte Flachdichtung 5 mit geringem Kaltfluss angeordnet.

Durch Schleifen und/oder Überdrehen der scheibenförmigen Dichtbereiche kann die für eine spannungsfreie Verlegung von Rohrteilen notwendige Präzision erreicht werden.

### Figuren 2 und 3

Zwei Rohrteile 10 und 20 weisen als Verbindungselement je einen Verbindungsflansch 101 bzw. 201 auf, auf denen emaillierte Verbindungsbereiche 13 bzw. 14 angeordnet sind. Der Verbindungsbereich 13 umfasst einen Dichtbereich 132, der im wesentlichen durch eine Ringnut 131 gebildet wird und über eine abgerundete Kante 130 in einen Produktbereich 109 übergeht. Dem Dichtbereich 132 des Verbindungsbereichs 13 des Rohrteils 10 gegenüber liegt der Dichtbereich des Verbindungsbereichs 14 des Rohrteils 20. Letzterer Dichtbereich wird im wesentlichen durch eine Ringnut 141 gebildet und geht über eine abgerundete Kante 140 in einen Produktbereich 190 über.

Die Ringnuten 131 und 141 weisen im dargestellten Ausführungsbeispiel einen runden Querschnitt auf. Denkbar ist aber auch ein Querschnitt mit deutlich ausgebildeten, abgerundeten Kanten, wobei dank des erfindungsgemäss ausgewählten Emailträgermaterials relativ kleine Kantenradien erreicht werden können.

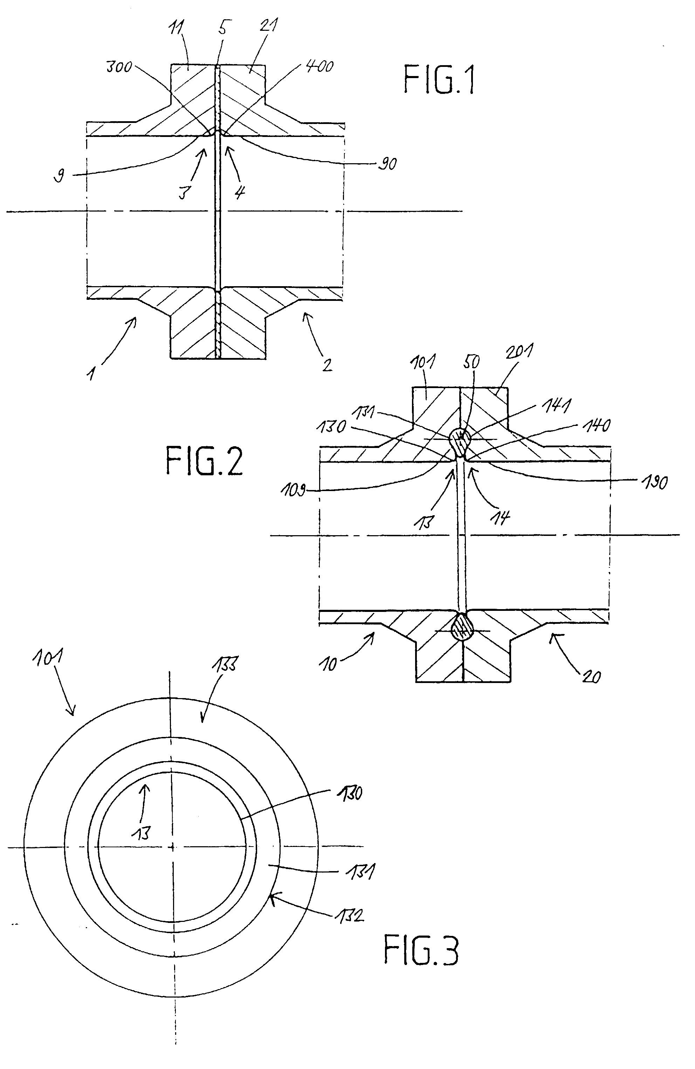

Die Verbindungsflansche 101 und 201 können wiederum auf beliebige, bekannte Weise miteinander verbunden sein, beispielsweise durch Verschraubung (nicht dargestellt). Der Kraft-Hauptschluss erfolgt hier über ausserhalb der Dichtbereiche einander gegenüberliegende, nicht-emaillierte, metallische Bundflächen, von denen die eine in Fig. 3 mit der Bezugsziffer 133 bezeichnet ist.

Zwischen dem Dichtbereich des Verbindungsbereichs 13 des Rohrteils 10 und dem Dichtbereich des Verbindungsbereichs 14 des Rohrteils 20, d.h. in den Ringnuten 131 und 141, ist im Kraft-Nebenschluss eine ringförmige Weichstoff-Dichtung 50 angeordnet. Gegebenenfalls kann noch zusätzlich eine Lippe eingebracht werden, welche den verbleibenden Spalt zwischen den Dichtbereichen bündig verschliesst.

Durch Überdrehen der nicht-emaillierten, metallischen Bundflächen kann die für eine spannungsfreie Verlegung von Rohrteilen notwendige Präzision erreicht werden.

### Figur 4

Der emaillierte Verbindungsbereich eines Stahlbauteils umfasst ein Emailträgermaterial 6, auf den ein Grundemail 7 und darauf ein Chemieemail 8 aufgebracht ist. Als Grundemail 7 und Chemieemail 8 werden in der Emailliertechnik bekannte, für den Verwendungszweck des Stahlbauteils geeignete Emaille verwendet. Als Emailträgermaterial 6 wird ein Material verwendet, das nur sehr wenig bzw. zur emailabgewandten Seite ausgast und eine grundemailarme Emaillierung zulässt. Mögliche Emailträgermaterialien sind geeignete höchlegierte Stähle und Nickel-Chrom-Legierungen, insbesondere der DIN-Werkstoff Nr. 2.4816 und der DIN-Werkstoff Nr. 2.4610.

Erfindungsgemäss wird bei der Herstellung des emaillierten Verbindungsbereichs eines Stahlbauteils das Emailträgermaterial 6 mit einer abgerundeten Kante zwischen Dichtbereich und Produktbereich mit einem Radius zwischen etwa 0,5 und etwa 2 mm ausgebildet. Das Emailträgermaterial 6 wird dabei flächig auf eine metallische Fläche des Stahlbauteils aufgebracht oder als quasi-selbständiges Teil nur lokal mit dem Rest des Stahlbauteils verbunden. Je nach Bedarf wird das Emailträgermaterial 6 mit Ringnuten und/oder weiteren abgerundeten Kanten versehen.

Anschliessend wird das Grundemail 7 in einer oder zwei Schichten auf das Emailträgermaterial 6 und danach das Chemieemail 8 in vier oder fünf Schichten auf das Grundemail 7 aufgetragen, wobei die Schichtdicke jeweils zwischen etwa 0,15 mm und etwa 0,2 mm beträgt. Auftragen bedeutet hier Aufbringen, Brennen, Überdrehen und Überschleifen, wobei auch Ausführungsformen ohne Überdrehen und/oder Überschleifen denkbar sind.

Als Alternative dazu kann, falls ein Emailträgermaterial 6 verwendet wird, das eine grundemailfreie Emaillierung zulässt, das Chemieemail 8 auch direkt in vier oder fünf Schichten auf das Emailträgermaterial 6 aufgetragen werden. Anstelle des Grundemails 7 bildet sich bei dieser Ausführungsvariante während der Emaillierung auf dem Emailträgermaterial 6 eine Oxidationsschicht.

Durch das Auftragen einer nur sehr dünnen oder überhaupt keiner Grundemailbeschichtung, was durch ein erfindungsgemäss gewähltes Emailträgermaterial 6 ermöglicht wird, können die Gesamtschichtdicke des Emails ohne Beeinträchtigung der Beständigkeit und damit die Radien der abgerundeten Kanten relativ gering gehalten werden.

Das Chemieemail 8 wird vorteilhafterweise hochverschmolzen, so dass es nur noch kleine Blasen aufweist. Dadurch kommt es beim Überschleifen nur zu einer minimalen Oberflächenvergrösserung, wodurch eine gute Korrosionsbeständigkeit gewährleistet wird.

Das Brennen des Verbindungsbereichs erfolgt mit Vorteil bei horizontaler Lage der Hauptebene des Dichtbereichs bzw. im Ofen drehend. Dadurch wird ein störendes, undefiniertes Abfliessen des Emails verhindert oder zumindest vermindert.

### Fig. 5

Ein Rohrteil 30 weist zwei Verbindungsflansche 301 und 302 auf. Am Verbindungsflansch 301 ist ein emaillierter Verbindungsbereich 31 mit einem scheibenförmigen Dichtbereich 32 angeordnet. Der am Verbindungsflansch 302 angeordnete emaillierte Verbindungsbereich ist nicht sichtbar.

### Fig. 6

Ein Apparatedeckel 40 weist drei Apparatestutzen 410, 420 und 430 auf, die je mit einem Verbindungsflansch 401, 402 bzw. 403 versehen sind. An den Verbindungsflanschen 401, 402 und 403 sind emaillierte Verbindungsbereiche 41, 42 bzw. 43 mit scheibenförmigen Dichtbereichen angeordnet.

Zu den vorbeschriebenen Verfahren zur Herstellung eines emaillierten Verbindungsbereichs bei einem Stahlbauteil und mit emaillierten Verbindungsbereichen versehenen Stahlbauteilen sind weitere Variationen realisierbar. Hier ausdrücklich erwähnt sei noch, dass im emaillierten Verbindungsbereich eines Stahlbauteils auch mehr als eine Ringnut angeordnet sein kann. Denkbar sind auch weitere abgerundete Kanten, wobei dank des erfindungsgemäss ausgewählten Emailträgermaterials relativ kleine Kantenradien erreichbar sind.

## Patentansprüche

1. Verfahren zur Herstellung eines emaillierten Verbindungsbereichs (3, 4; 13, 14; 31; 41, 42, 43) bei einem Stahlbauteil, wobei der Verbindungsbereich (3, 4; 13, 14; 31; 41, 42, 43) einen Dichtbereich (32; 132) aufweist,, der über eine abgerundete Kante (130, 140; 300, 400) in einen Produktbereich (9, 90; 109, 190) übergeht, dadurch gekennzeichnet, dass im Verbindungsbereich (3, 4; 13, 14; 31; 41, 42, 43) ein Emailträgermaterial (6), das nur sehr wenig bzw. zur emailabgewandten Seite ausgast und eine grundemailfreie Emaillierung zulässt, mit einer abgerundeten Kante (130, 140; 300, 400) mit einem Radius zwischen etwa 0,5 und etwa 2 mm ausgebildet und anschliessend mit einem hochsäurefesten Chemieemail (8) beschichtet wird, wobei die Beschichtung mit dem Chemieemail (8) in mehreren Schichten durch mehrmaliges Aufbringen, Brennen, Überdrehen und Überschleifen erfolgt.

2. Verfahren zur Herstellung eines emaillierten Verbindungsbereichs (3, 4; 13, 14; 31; 41, 42, 43) bei einem Stahlbauteil, wobei der Verbindungsbereich (3, 4; 13, 14; 31; 41, 42, 43) einen Dichtbereich (32; 132) aufweist, der über eine abgerundete Kante (130, 140; 300, 400) in einen Produktbereich (9, 90; 109, 190) übergeht, dadurch gekennzeichnet, dass im Verbindungsbereich (3, 4; 13, 14; 31; 41, 42, 43) ein Emailträgermaterial (6), das nur sehr wenig bzw. zur emailabgewandten Seite ausgast und eine grundemailarme Emaillierung zulässt, mit einer abgerundeten Kante (130, 140; 300, 400) mit einem Radius zwischen etwa 0,5 und etwa 2 mm ausgebildet und anschliessend zuerst mit einem Grundemail (7) und dann mit einem hochsäurefesten Chemieemail (8) beschichtet wird, wobei die Beschichtung mit dem Grundemail (7) und mit dem Chemieemail (8) in mehreren Schichten durch mehrmaliges Aufbringen, Brennen, Überdrehen und Überschleifen erfolgt.

3. Verfahren nach Anspruch 1 oder 2, dadurch gekennzeichnet, dass das Chemieemail (8) in vier oder fünf Schichten und gegebenenfalls das Grundemail (7) in einer oder zwei Schichten aufgetragen wird, wobei die Schichtdikke jeweils zwischen etwa 0,15 mm und etwa 0,2 mm beträgt.

4. Verfahren nach einem der Ansprüche 1 bis 3, dadurch gekennzeichnet, dass das Brennen des Verbindungsbereichs (3, 4; 13, 14; 31; 41, 42, 43) bei horizontaler Lage der Hauptebene des Dichtbereichs (32; 132) bzw. im Ofen drehend erfolgt.

5. Verfahren nach einem der Ansprüche 1 bis 4, dadurch gekennzeichnet, dass als Emailträgermaterial (6) hochlegierter Stahl verwendet wird.

6. Verfahren nach einem der Ansprüche 1 bis 5, dadurch gekennzeichnet, dass als Emailträgermaterial (6) eine Nickel-Chrom-Legierung, insbesondere der DIN-Werkstoff Nr. 2.4816 oder der DIN-Werkstoff Nr. 2.4610 verwendet wird.

7. Verfahren nach einem der Ansprüche 1 bis 6, dadurch gekennzeichnet, dass der Dichtbereich (132) allgemein ringförmig ausgebildet wird und in ihm mindestens eine Ringnut (131, 141) zur Aufnahme einer ringförmigen Dichtung (50) angebracht wird.

8. Verfahren nach einem der Ansprüche 1 bis 7, dadurch gekennzeichnet, dass das Stahlbauteil ein Rohrteil (1, 2; 10, 20; 30) oder ein Apparatestutzen (410, 420, 430) mit mindestens einem Verbindungsflansch (11, 21; 101, 201; 301, 302; 401, 402, 403) ist.

9. Stahlbauteil mit mindestens einem nach einem der Verfahren 1 bis 8 hergestellten emaillierten Verbindungsbereich (3, 4; 13, 14; 31; 41, 42, 43).

10. Verbindung zweier Stahlbauteile gemäss Anspruch 9, dadurch gekennzeichnet, dass zwischen mindestens einem Teil des Dichtbereichs (32; 132) des einen Stahlbauteils und mindestens einem Teil des Dichtbereichs (32; 132) des anderen Stahlbauteils eine harte Flachdichtung (5) oder eine ringförmige Weichstoff-Dichtung (50) angeordnet ist.

## Claims

1. Method of producing an enamelled joint region (3, 4; 13, 14; 31; 41, 42, 43) in a steel component, the joint region (3, 4; 13, 14; 31; 41, 42, 43) having a sealing region (32; 132) which merges via a rounded-off edge (130, 140; 300, 400) into a product region (9, 90; 109, 190), characterized in that an enamel substrate material (6) which emits only very little gas or emits gas to the side remote from the enamel and permits enamelling free of base enamel is formed in the joint region (3, 4; 13, 14; 31; 41, 42, 43) with a rounded-off edge (130, 140; 300, 400) having a radius of between about 0.5 and about 2 mm and is subsequently coated with a highly acid-resistant chemical enamel (8), the coating being effected with the chemical enamel (8) in a plurality of layers by repeated application, firing, turning of the outside diameter and grinding of the outside diameter.

2. Method of producing an enamelled joint region (3, 4; 13, 14; 31; 41, 42, 43) in a steel component, the joint region (3, 4; 13, 14; 31; 41, 42, 43) having a sealing region (32; 132) which merges via a rounded-off edge (130, 140; 300, 400) into a product region (9, 90; 109, 190), characterized in that an enamel substrate material (6) which emits only very little gas or emits gas to the side remote from the enamel and permits enamelling with little base enamel is formed in the joint region (3, 4; 13, 14; 31; 41, 42, 43) with a rounded-off edge (130, 140; 300, 400) having a radius of between about 0.5 and about 2 mm and is subsequently coated first with a base enamel (7) and then with a highly acid-resistant chemical enamel (8), the coating being effected with the base enamel (7) and with the chemical enamel (8) in a plurality of layers by repeated application, firing, turning of the outside diameter and grinding of the outside diameter.

3. Method according to Claim 1 or 2, characterized in that the chemical enamel (8) is applied in four or five layers, and if need be the base enamel (7) is applied in one or two layers, the layer thickness in each case being between about 0.15 mm and about 0.2 mm.

4. Method according to one of Claims 1 to 3, characterized in that the joint region (3, 4; 13, 14; 31; 41, 42, 43) is fired in a horizontal position of the main plane of the sealing region (32; 132) or in a rotational manner in the furnace.

5. Method according to one of Claims 1 to 4, characterized in that high-alloy steel is used as the enamel substrate material (6).

6. Method according to one of Claims 1 to 5, characterized in that a nickel-chromium alloy, in particular the DIN material No. 2.4816 or the DIN material No. 2.4610, is used as the enamel substrate material (6).

7. Method according to one of Claims 1 to 6, characterized in that the sealing region (132) is generally of annular design and at least one annular groove (131, 141) for accommodating an annular seal (50) is made in it.

8. Method according to one of Claims 1 to 7, characterized in that the steel component is a pipe part (1, 2; 10, 20; 30) or an apparatus nozzle (410, 420, 430) having at least one joint flange (11, 21; 101, 201; 301, 302; 401, 402, 403).

9. Steel component having at least one enamelled joint region (3, 4; 13, 14; 31; 41, 42, 43) produced according to one of the methods 1 to 8.

10. Joint between two steel components according to Claim 9, characterized in that a hard gasket (5) or an annular seal (50) made of soft material is arranged between at least one part of the sealing region (32; 132) of the one steel component and at least one part of the sealing region (32; 132) of the other steel component.

## Revendications

1. Procédé de fabrication d'une zone d'assemblage émaillée (3, 4 ; 13, 14 ; 31 ; 41, 42, 43) pour une pièce en acier, la zone d'assemblage (3, 4 ; 13, 14 ; 31 ; 41, 42, 43) présentant une zone étanche (32 ; 132) qui passe dans une zone du produit (9, 90 ; 109, 190) par l'intermédiaire d'un bord arrondi (130, 140 ; 300, 400), caractérisé en ce que, dans la zone d'assemblage (3, 4 ; 13, 14 ; 31 ; 41, 42, 43), il est prévu un substrat pour l'émail (6) qui ne dégage que très peu de gaz respectivement, le dégage vers le côté opposé à l'émail, permet un émaillage sans émail de fond, est conçu avec un bord arrondi (130, 140 ; 300, 400) présentant un rayon de 0,5 mm environ à 2 mm environ et ensuite, est revêtu d'un émail vitrifié (8) hautement résistant aux acides, le revêtement avec l'émail vitrifié (8) se faisant en plusieurs couches par une application cuisson, surrotation et surpolissage en plusieurs fois.

2. Procédé de fabrication d'une zone d'assemblage émaillée (3, 4 ; 13, 14 ; 31 ; 41, 42, 43) pour une pièce en acier, la zone d'assemblage (3, 4 ; 13, 14 ; 31 ; 41, 42, 43) présentant une zone étanche (32 ; 132) qui passe dans une zone du produit (9, 90 ; 109, 190) par l'intermédiaire d'un bord arrondi (130, 140 ; 300, 400), caractérisé en ce que, dans la zone d'assemblage (3, 4 ; 13, 14 ; 31 ; 41, 42, 43), il est prévu un substrat pour l'émail (6) qui ne dégage que très peu de gaz respectivement le dégage vers le côté opposé à l'émail, permet un émaillage avec peu d'émail de fond, est conçu avec un bord arrondi (130, 140 ; 300, 400) présentant un rayon de 0,5 mm environ à 2 mm environ et ensuite, est revêtu tout d'abord d'un émail de fond (7) et après, d'un émail vitrifié (8) hautement résistant aux acides, le revêtement avec l'émail de fond (7) et avec l'émail vitrifié (8) se faisant en plusieurs couches par une application cuisson, surrotation et surpolissage en plusieurs fois.

3. Procédé selon la revendication 1 ou 2, caractérisé en ce que l'émail vitrifié (8) est appliqué en quatre ou cinq couches, et le cas échéant, en ce que l'émail de fond (7) est appliqué en une ou deux couches, l'épaisseur de la couche allant respectivement de 0,15 mm environ à 0,2 mm environ.

4. Procédé selon l'une quelconque des revendications 1 à 3, caractérisé en ce que la cuisson de la zone d'assemblage (3, 4 ; 13, 14 ; 31 ; 41, 42, 43) a lieu avec une position horizontale du plan principal de la zone étanche (32 ; 132) respectivement par rotation dans le four.

5. Procédé selon l'une quelconque des revendications 1 à 4, caractérisé en ce que l'on utilise comme substrat pour l'émail (6), un acier à haut alliage.

6. Procédé selon l'une quelconque des revendications 1 à 5, caractérisé en ce que l'on utilise comme substrat pour l'émail (6), un alliage chrome-nickel, en particulier un matériau DIN n° 2,4816 ou un matériau DIN n° 2.4610.

7. Procédé selon l'une quelconque des revendications 1 à 6, caractérisé en ce que la zone étanche (132) est en général annulaire et en ce qu'au moins une rainure annulaire (131, 141) est réalisée dans ladite zone pour le logement d'un joint d'étanchéité (50) annulaire.

8. Procédé selon l'une quelconque des revendications 1 à 7, caractérisé en ce que la pièce en acier est un élément de tube (1, 2 ; 10, 20 ; 30) ou un raccord d'appareil (410, 420, 430) avec au moins une bride d'assemblage (11, 21 ; 101, 201 ; 301, 302 ; 401, 402, 403).

9. Pièce en acier comportant au moins une zone d'assemblage (3, 4 ; 13, 14 ; 31 ; 41, 42, 43) émaillée réalisée selon l'un des procédés 1 à 8.

10. Assemblage de deux pièces en acier selon la revendication 9, caractérisé en ce que, entre au moins une partie de la zone étanche (32 ; 132) de l'une des pièces en acier et au moins une partie de la zone étanche (32 ; 132) de l'autre pièce en acier, est disposé un joint d'étanchéité plat (5) et dur ou un joint d'étanchéité (50) souple et annulaire.
